# EUROPEAN PATENT SPECIFICATION

(11) **EP 3 333 337 B1**
(45) Date of publication and mention of the grant of the patent: **03.03.2021**
(21) Application number: 16767013.2
(22) Date of filing: 02.08.2016
(51) Int. Cl.: E04F 13/14, C04B 28/02, C04B 111/00, C04B 111/82, G02F 1/15

(54) **ELECTROCHROMIC CEMENT MATERIAL STRUCTURE AND METHOD FOR PRODUCING SAME**
ELEKTROCHROMISCHE STRUKTUR VON ZEMENTÖSEM MATERIAL UND VERFAHREN ZU IHRER PRODUKTION
STRUCTURE ÉLECTROCHROMIQUE DE MATÉRIAU CIMENTAIRE ET PROCÉDÉ DE PRODUCTION

(30) Priority: 03.08.2015 PT 2015108749
(43) Date of publication of application: 13.06.2018
(73) Proprietor: Secil S.A. - Companhia Geral De Cal e Cimento, S.A., 2901-864 Setubal (PT); YD Ynvisible, S.A., 2070-104 Cartaxo (PT)
(72) Inventor: JESUS DE SEQUEIRA SERRA NUNES, Ângela Maria, 2925-181 Azeitão (PT); VERMELHUDO, Vítor, 2925-181 Azeitão (PT); BRITO DA COSTA, Cláudia, 4480-394 Vila do Conde (PT); PEDRO DE GOMES, Lúcia, 2005-078 Santarém (PT)
(74) Representative: do Nascimento Gomes, Rui
(86) International application number: PCT/IB2016/054637
(87) International publication number: WO 2017/021877

(56) References cited:
- WO-A2-2004/113459
- WO-A2-2008/134019
- DE-A1- 19 706 918
- JP-A- S61 203 428
- US-A- 5 771 617

## Description

### FIELD OF THE INVENTION

The present invention is in the field of chemistry and of cementitious materials, such as cement or concrete, with application in the sectors of construction, coating of surfaces such as floors, walls and ceilings, decoration and furniture.

The present invention is concerned with a structure of cementitious material having color change capability, by means of electrochromic technology, as well as with its method of production.

### BACKGROUND OF THE INVENTION

One of the most used cementitious materials, concrete, is a material comprising a mixture of cement, aggregates and water. In addition to these basic components, it may also contain various additives.

From manufacturing to the stage where it performs structural roles, concrete goes through two different states: fresh concrete and hardened concrete. The first is defined as concrete still in the plastic state and able to be compressed by methods considered conventional ones. The second is defined as concrete that has hardened and developed a certain resistance. Concrete hardening begins within hours after its manufacture and reaches 60 to 90% of its final strength after 28 days of curing, depending on the cement type and on the type of curing used.

Hardened concrete is classified according to its apparent density into three categories:
- Standard concrete: Concrete having an apparent density after drying in an oven (105°C) greater than 2000 kg/m³ (but not exceeding 2600 kg /m³).
- Heavy concrete: Concrete having an apparent density after drying in an oven greater than 2600 kg/m³.
- Lightweight concrete: Concrete having an apparent density after drying in an oven not exceeding 2000 kg/m³, wholly or partly made from lightweight aggregates.

Concretes are also classified into different strength classes, according to the compressive strength measured on cylinders or cubes. Thus, for example, a C35/45 is a normal concrete with a characteristics compressive strength equal to 35 MPa when measured in cylinders and equal to 45 MPa when measured in cubes. The concrete composition, in addition to ensuring a particular strength class, must be specified depending on the durability requirements for each work. That is, once the life span of the construction is defined, limits on the composition and various parameters are indicated as a function of environmental exposure classes (environmental aggression).

From the point of view of structural design, of interest there are basically two fundamental properties a cementitious material must meet: strength and durability. However, for these properties to be achieved, it must be applied and compacted in an appropriate manner, thus resulting a third fundamental property: workability. Thus, the study of the composition of the cementitious materials should be made based on the objective, for each specific situation, to achieve adequate strength, durability and workability.

Regarding concrete, its hardening and increased resistance is due to the cement hydration reactions, which in contact with water reacts and gives rise to new stable hydrated compounds which crystallize binding to each other and providing the whole with high resistance. After mixing, the fluidity of the paste slowly decreases. After spending 2 to 4 hours at room temperature, the paste starts to gain stiffness much faster and it is considered that it has reached the beginning of setting. However, the hardening begins only after the end of the setting (which occurs after a few hours), and much faster after the first or second day of hydration. Subsequently, the resistance increases but at a diminishing rate, for weeks, months and years. The water reacts very quickly with C3A (tricalcium aluminate), yielding fast and instantaneous setting, this being the reason for the addition of gypsum to clinker to produce cement. The gypsum will moderate or delay the action of water on C3A, because this reacts faster with sulfate than with water, forming a hydrated calcium sulfoaluminate also known as ettringite (3CaO.Al2O3.3CaSO4.32H2O). Gypsum also reacts with C4AF (tetracalcium ferroaluminate), forming calcium sulfoferrate which, together with the calcium sulfoaluminate accelerates the hydration of silicates. It should also be noted that C3S (tricalcium silicate) and C2S (dicalcium silicate) upon reaction with water give rise to C3S2H3 or CSH, as it is known, which is responsible for the strength achieved in the hardened cement, with C3S reacting in larger amounts as the reaction of C2S is slower.

As regards the concrete surface, it chemically maintains the same structure. From the standpoint of finishing (texture), this is dependent on the composition and application of the concrete, and the quality/type of formwork/mold.

In the case of high performance architectural concretes and where a smooth, high quality finish is required, the concrete has to have a high wall effect. This wall effect is the result of the migration of concrete fines to its surface, promoting compactness. The use of additions, in particular fillers, also came in support of this development, allowing dosages of cement compatible with shrinkage and elastic modulus compatible with allowable deformations and minimum slit opening, without prejudice to a good capacity and homogeneity of the skin of these concretes. A smooth architectural concrete with a high level of finishing is associated with high durability, which is characterized by low values of capillary absorption, permeability to chlorides and shrinkage of the concrete after 28 days.

In terms of texture much work has been done both before and after hardening. The smooth texture is undoubtedly the one of choice for most projects. For its proper implementation it is necessary to strengthen the motivation of the teams at work, particularly in the preparation of formworks. In fact, the quality of the panel, leak tightness, cleanliness and deformability of the falsework must be well controlled to avoid unsightly final deformations in concreted parts.

In addition to the products mentioned above in the text, silanes and siloxanes are commonly used and in the case of risk of graffiti, acrylic based films are used as a surface film, to be removed from the support with a solvent, in the case of the occurrence of graffiti.

It is also possible to apply to these high compactness concretes, surface treatments identical to those used with stone, such as polishing, bush hammering, abrading, sand blasting, or even flaming in the case of using granite aggregates.

In terms of texture there are also many other available techniques such as molding from elastomeric molds with pre-defined texture, to surface embossing made before the start of setting. In the figure, there is the example of a silicone mold, to stick to the traditional maritime plywood or steel formwork. This mold already has the final texture required. These high performance concretes are so sensitive that they capture on their surface even permanent scratchings, allowing to explore this effect artistically, especially in the field of sculpture.

Another technique widely used is surface deactivation, which can work either on the positive side (application of deactivator on a floor, for example, before the initial setting) or on the negative side when the application of the deactivator is performed directly on the formwork.

In this case the effect of the surface retarder does not allow hardening to occur to the desired depth of attack. After formwork removal or surface hardening, if the concrete has adequate strength, it is washed and the surface brushed, removing laitance and exposing the aggregate of the matrix.

This can result in interesting effects of color combinations, shape, size and type of aggregate versus the color of the matrix. Other techniques have been developed more recently such as a silk screen printing in concrete, through the use of photographic prints which, when placed at the base of the formwork, allow the still fresh concrete to absorb them superficially with very interesting effects.

Despite intensive research having been carried out, to date no documents have been found reporting on the integration or deposition of electrochromic materials in concrete.

With regard to the integration of other chromogenic materials such as thermochromics in concrete, there are some reports in the literature on scientific developments in this area.

The following documents represent the prior art for the present invention:
- T. Karlessi, et al. Thermochromic energy efficient coatings for buildings and urban structures, National and Kapodistrian University of Athens, Section of Applied Physics, Physics Department, Athens, Greece. It is an article that reports the development of thermochromic coatings applied to buildings and urban structures.
- Yiping Ma, Beirong Zhu, Cement and Concrete Research, 39 (2009) 90-94. This scientific paper reports the preparation of reversible thermochromic cement, by adding reversible thermochromic microcapsules to white Portland cement. The results obtained showed that the color of the cement with the additive can change from:
   1) blue to white, by varying the temperature between 30°C and 42°C, respectively;
   2) red or green to white, by varying the temperature between 30°C and 58°C, respectively.

This change of temperatures may indicate the need for heat in winter or cooling in summer, in buildings where this type of cement is applied. It is however necessary to take into consideration that mechanical properties of cements with additives decrease by about 20%-40%, so that their application in a certain typology of buildings may be conditioned.

### • Chronos Chromos Concrete,

http://www.innovation.rca.ac.uk/718/all/1/Chronos-Chromos-Concrete.aspx. This is a system that is able of displaying dynamic patterns, figures and text on concrete surfaces that can be applied to any type of products, from small to large architectural installations. This system consists of mixing a thermochromic paint in the cement, and setting beneath the surface of the concrete chromium and nickel wires which are heated when crossed by an electric current. Thus, the surface above these chromium and nickel wires also heats, causing the thermochromic paint to change color and exposing the design formed by the copper and nickel wires.

Patent US 5,771,617 discloses a display device which may be incorporated in the structure of a building, namely consisting of a block with a light emitting diode (LED) molded therein. The block is incorporated within the building structure such that the display surface is exposed at and protrudes from at least one surface of the building structure. Such display device may be in the form of a single illuminable device embedded in a disc of robust composition and is described as particularly useful in precast concrete surfaces or terrazzo surfaces such as stairs or steps.

Patent application JPS 61203428 discloses an electrochromic element formed on a substrate to permit easy color change and control of color density. It is described as comprising an electrochromic film consisting of tungsten oxide which is formed on a transparent electrode and a white electrode facing the transparent electrode, formed thereon via a solid electrolyte. Other elements providing change and control of color are described.

### TECHNICAL PROBLEMS SOLVED

With a view to providing the products of cementitious material with features related to the concept of ubiquitous computing, a gap was identified in the area of these materials: the near absence of interactivity with the user. The present invention aims at taking a step towards pervasive interactivity and computing using a structure of cementitious material, achieving modulation of the color of its surfaces in uniform patterns or in the form of user-defined messages.

In the present invention, the object is to obtain structures with color change capability by automatic or human control means.

Taking into account that the known prior art in this area reports cementitious material structures with thermochromic features, the ability of changing their color results only from activation by changing their, on the one hand complicating the mechanisms leading to color change if an automatic or on request change is desired, or limiting them if there are no devices that automatically provide the temperature change of the structures, leading to the consequent color change.

Thus, the present invention is an innovative solution for the creation of structures of cementitious material which change their color by taking advantage of the characteristics of the cementitious materials synergistically with the characteristics of electrochromic technology.

### SUMMARY OF THE INVENTION

It is an object of the present invention an electrochromic structure of cementitious material containing at least one electrochromic device (7) formed in at least one cavity as claimed in claim 1.

The technical solution as defined above provides that a structure of cementitious material, which may be molded to the desired shape and aspect, be created so to have embedded or formed in itself certain components that provide a color change effect. The electrochromic technology presents itself as a novel solution for obtaining this effect, the creation of a difference of potential to the terminals of the electrochromic device (7), namely the first electrochromic element (2) - which is conductive - and the electroactive element (8), also electrically conductive, leading to a color change and therefore of the structure of cementitious material, because the first electrochromic element (2) is visible from the outside of said structure.

In a more specific solution of the invention, which can be combined with the former one, the means of application of a difference of potential (4) comprise at least two electrical conductors partially embedded in the cementitious material, arranged in such a way that a portion of each of said conductors is electrically accessible in cavity (1).

This feature is also directed, in an advantageous embodiment of the present invention, at taking advantage of the molding capability of cementitious materials which, embedding electrical conductors, enable remote or local control solutions of the color of the structure.

In a more specific embodiment of the present invention, which can be combined with any other - individually - or with both of the foregoing, the at least one electrochromic device (7) further contains a filling electrical contact (6) disposed on one of the at least two electrical conductors and in contact with the electroactive element (8).

This feature, in another advantageous embodiment of the present invention allows that, on the one hand, no bad contact occurs between one of the at least two electrical conductors and the electroactive element (8). On the other hand, it improves achieving the final color, through the symmetry between the two electrodes of the electrochromic device (7) (the electroactive element (8) and the first electrochromic element (2)).

It is worthy noting that, by means of contact with said electrical conductor, the electroactive element (8) could have a volume and shape different from the first electrochromic element (2), generating lack of symmetry and a color different from the desired one. It should however be noted that this is only an advantageous embodiment of the present invention as previously formulated, that would work even without this additional feature.

In another more specific solution of the present invention, which can be combined with any of the preceding ones, in different possible ways, one of the at least two electrical conductors is in electrical contact with the first electrochromic element (2).

The present invention also includes a method of production, specifically of the electrochromic structure of cementitious material previously defined, in its different variations, which includes the following steps:
a) inclusion of means of application of a difference of potential (4) in the cementitious material;
b) forming a cavity (1) in the surface of the structure of cementitious material;
c) depositing an electrically conductive electroactive element (8);
d) depositing an electrolyte (3) on the electroactive element (8);
e) depositing a first electrochromic element (2) on the electrolyte (3).

This is the method for producing the structure of cementitious material in its most general form, the means of application of a difference of potential (4) being embedded in the structure upon its formation, so while at least a part thereof has not yet solidified.

### DESCRIPTION OF THE FIGURES

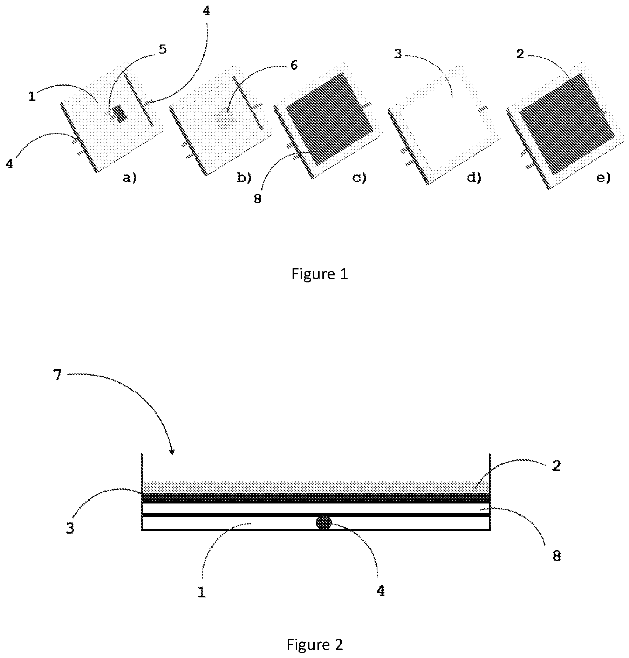

Figure 1 - represents a detailed configuration of the method of the present invention, showing part of the electrochromic structure of cementitious material with the means of application of a difference of potential (4) integrated in the structure - in the form of two electrical conductors - for connecting to the electrochromic device (7). In image a) it is visible cavity (1) and a lower cavity (5) inside cavity (1) where an electric conductor is visible, and this cavity has smaller dimension than cavity (1), in which it is formed.
   Image b) shows the deposition of the electrical contact filling (6).
   Image c) shows the deposition of an electrically conductive electroactive element (8) to serve as the lower electrode in the electrochromic device (7).
   Image d) shows the deposition of electrolyte (3), which may be opaque or transparent.
   Image e) shows the deposition of a first electrically conductive electrochromic element (2) to function as the upper electrode in the electrochromic device (7).
Figure 2 - represents a sectional view of the configuration in the most general form of the electrochromic structure of cementitious material of the present invention, which increases each component in relation to reality, so that all are clearly visible. It presents an electrochromic device (7) formed in a cavity (1) which is formed on the surface of the structure of cementitious material (not shown for simplicity of the image), explaining the components of the electrochromic device (7): a first electrochromic element (2) and an electroactive element (8), insulated from each other by an electrolyte (3). Also visible are the means of application of a difference of potential (4) in the form of a conductor. Cavity (1) surrounds all the remaining components.

### DETAILED DESCRIPTION OF THE INVENTION

The present invention has its most general embodiments in the forms defined above, in the Summary of the Invention.

However, these embodiments can be detailed, including advantageous details related to the operation and construction of the object of the present invention, as set forth below.

At this point, it is important to note that between the electroactive element (8) and the first electrochromic element (2) a difference of potential is applied to elicit the changes of the redox state of the electrochromic agent that is part of its composition.

In a preferred embodiment of the structure of the present invention, the first electrochromic element (2) consists of the association of an electrochromic element with an electrically conductive element. This is the preferred form of construction of the electrochromic device (7).

In a preferred embodiment of the structure of the present invention, combinable with any of the foregoing, the electroactive element (8) is in electrically conductive association of an electroactive element with an electrically conductive element.

In a further embodiment of the structure of the present invention, the electroactive element (8) consists of a second electrochromic element, which is electrically conductive or which consists in associating an electrochromic element with an electrically conductive element.

In a further embodiment of the structure object of the present invention, combinable with any of the previously defined embodiments, the portion of each of said conductors which is electrically accessible in cavity (1) is specifically at least in another smaller cavity (5) formed in cavity (1), suitable to expose at least one of said conductors in contact with the electroactive element (8). The inclusion of the smaller cavity (5) consists in an advantageous embodiment of the invention, in which the connection to the means of application of a difference of potential (4) is facilitated. Considering the configuration in which an electrical contact of filler is included, it is on the smaller cavity (5) that the the electrical contact of filler (5) is located, filling it.

In another preferred embodiment of the electrochromic structure of cementitious material of the invention, combinable with any of the foregoing, any one of the components of the electrochromic device (7) is disposed as a layer having a substantially planar shape. Each layer performs a specific function, namely electrical conduction, ionic conduction and electrochromic functionality (color change, through changes in the redox state of the material).

In a further embodiment of the structure of the invention, combinable with those previously defined, the electrochromic device (7) is arranged parallel to at least one surface of the structure of cementitious material in order to make the structure a single element, wherein at least a portion changes color without discontinuity.

In a further embodiment of the structure of the present invention, combinable with those previously defined, the structure of cementitious material contains a plurality of cavities (1) in the cementitious material and a plurality of electrochromic devices (7) arranged aligned along a direction or grid on the surface of the electrochromic structure of cementitious material. Such a configuration enables the creation of visual objects, such as:
- A single non-editable image;
- Two distinct and non-editable images;
- Segmented appearance;
- Pixelated appearance.

In a further embodiment of the structure of the present invention, combinable with those previously defined, are included control means suitable for controlling the difference of potential imposed by the means of application of a difference of potential (4), enabling color control via, for example, a microcontroller. They may also consist of conventional electronics, flexible electronics or hybrid electronics (with printed components) integrated in the structure itself. Activation of the electrochromic device (7) can be done by action resulting from the event detection via different types of sensors such as pressure, motion, moisture, temperature sensors, etc. which may also be incorporated in the structure of cementitious material.

In a further embodiment of the structure of the present invention, combinable with those previously defined, local or remote communication means connected to the control means are included in the structure of the present invention.

In a further embodiment of the structure of the present invention, combinable with those previously defined, the structure of cementitious material further comprises power supply means consisting of one or more of the following:
- mains, energy storage means, energy associated capture system.

These different power supplies can be controlled by said control means.

As noted in the Summary of the Invention, the present invention also includes a method of production, defined there in its most general form, but which also includes advantageous details or of operation, which are defined now.

In an advantageous embodiment and combinable with those defined above, the method of production of the present invention additionally comprises between steps b) and c) a deposition step for depositing a filling electrical contact (6) over at least part of the means of application of a difference of potential (4), which provides the advantageous solution already explained for the structure of the present invention, enabling better symmetry and electrical contact between the electroactive element (8) and the means of application of a difference of potential (4).

In a preferred embodiment of the method of the present invention, combinable with any of those defined above, step c) consists in depositing a second electrically conductive electrochromic element or in depositing an electrically conductive element on which is an electrochromic element is deposited.

In a preferred embodiment of the method of the present invention, combinable with any of those previously defined, step e) consists in depositing an electrochromic element on which an electrically conductive element is deposited.

In an advantageous embodiment and combinable with those previously defined, any deposition step comprises deposition of a layer of material.

In another advantageous embodiment of the method of the present invention, combinable with any of those previously defined, depositing a layer of a filling electrical contact (6) is specifically carried out on one of at least two electrical conductors comprising the means of application of a difference of potential (4). This detailed embodiment is a detail previously defined.

In another advantageous embodiment of the method of the present invention, combinable with any of those previously defined, the deposition of a first electrochromic element (2) places it in contact with the other of the at least two electrical conductors.

In yet another preferred embodiment of the method of the present invention, combinable with the former or with any of the embodiments previously defined, step b) includes forming in cavity (1) a smaller cavity (5) in which a portion of the means of application of a difference of potential (4) is electrically accessible. In the configuration in which the means of application of a difference of potential (4) consist of at least two electric conductors, the smaller cavity (5) is suitable to expose at least one of said conductors to contact with the electroactive element (8). In the configuration in which a filling electrical contact (6) is deposited, it is on the smaller cavity (2) that such deposition occurs, thereby filling it.

In a detailed embodiment of the method of the present invention, relating to the production process itself, and combinable with the above embodiments, the deposition steps of any electrochromic or electroactive element include drying of these elements, and the step of depositing the electrolyte layer (3) includes solidification of the electrolyte (3) by curing with radiation or drying with heat.

### EMBODIMENTS

In one embodiment of the object of the present invention, any of the elements with electrochromic properties comprises an electrochromic material from one of the following groups:
- metals, lanthanides, polyoxometalates and combinations thereof;
- organic molecules;
- conjugated polymers;
- coordination complexes of metals.

In one embodiment of the object of the present invention, combinable with the former or with any of the embodiments previously defined, electrolyte (3) is a good ionic conductor and simultaneously an electric insulator, being formed by admixing a salt at 2-15 % w/w, at least one resin, at least one solvent and a suitable additive to change the appearance and rigidity, wherein the salt consists of one of the following compounds: LiClO₄, ZnCl₂, LiBF₄, LiAsF₆, LiI, LiBr, LiCF₃SO₃, potassium salt, sodium salts or acids.

In one embodiment of the object of the present invention, combinable with the former or with any of the embodiments previously defined, the cementitious material consists of concrete, mortar or micro-concrete.

In one embodiment of the object of the present invention, combinable with the former or with any of the embodiments previously defined, the filling electrical contact (6) is silver ink.

In one embodiment of the object of the present invention, combinable with the former or with any of the embodiments previously defined, the material that makes up any electrochromic elements may be in the form of pigment, ink, or dye.

In one embodiment of the object of the present invention, combinable with the former or with any of the embodiments previously defined, the energy storage means comprise one or more of the following: battery, supercapacitor, or any other energy storage means known in the art.

In one embodiment of the method of the present invention, combinable with any of the embodiments defined above, any of the deposition steps is accomplished by coating, printing or spraying.

In one embodiment of the method of the present invention, combinable with the former or with any of the embodiments defined above, the cementitious material consists of concrete, mortar or micro concrete.

As it will be apparent to one skilled in the art, the invention should not be limited to the embodiments described herein, various changes being possible within the scope of the present invention as defined by the appended claims.

## Claims

1. Electrochromic structure of cementitious material comprising at least one electrochromic device (7) formed in at least one cavity (1), wherein the at least one electrochromic device (7) contains a first electrochromic element (2) and an electrically conductive electroactive element (8), insulated from each other by an electrolyte (3), and further comprising means of application of a difference of potential (4) between the first electrochromic element (2) and the electroactive element (8), and wherein:
a) the means of application of a difference of potential (4) are included in the cementitious material;
b) the cavity (1) is formed in the surface of the structure of cementitious material;
c) the electrically conductive electroactive element (8) is deposited on the cavity (1);
d) the electrolyte (3) is deposited on the electroactive element (8);
e) the first electrochromic element (2) is deposited on the electrolyte (3).

2. Electrochromic structure of cementitious material according to the previous claim wherein the means of application of a difference of potential (4) comprise at least two electrical conductors partially embedded in the cementitious material, arranged in such a way that a portion of each of said conductors is electrically accessible in said cavity (1).

3. Structure according to the previous claim wherein the at least one electrochromic device (7) further contains a filling electrical contact (6) arranged on one of said at least two electrical conductors, and in contact with the electroactive element (8).

4. Structure according to the previous claim wherein the other of the at least two electrical conductors is in electrical contact with the first electrochromic element (2) and, optionally:
the portion of the at least one of the electrical conductors electrically accessible in said cavity (1) is specifically in at least one other smaller cavity (5) formed in cavity (1), suitable to expose at least one of said conductors in contact with the electroactive element (8).

5. Structure according to any of the previous claims wherein the first electrochromic element (2) consists of the association of an electrochromic element with an electrically conductive element, and/or:
the electrically conductive electroactive element (8) consists of the association of an electroactive element with an electrically conductive element.

6. Structure according to any of the previous claims wherein the electroactive element (8) consists of a second electrochromic element, which is electrically conductive or which consists of an association of an electrochromic element with an electrically conductive element.

7. Structure according to any of the previous claims wherein any of the components of the electrochromic device (7) is arranged on a layer having a substantially planar form and, preferably, the electrochromic device (7) is arranged parallel to at least one surface of the structure of cementitious material, and/or:
any of the elements with electrochromic properties comprises an electrochromic material of one of the following groups:
• metals, lanthanides, polyoxometallates and combinations thereof;
• organic molecules;
• conjugated polymers;
• coordination complexes of metals
and preferably, the electrolyte (3) is formed by admixing a salt 2-15% w/w, at least one resin, at least one solvent and a suitable additive to change the appearance and rigidity, wherein the salt consists of the following compounds: LiClO₄, ZnCl₂, LiBF₄, LiAsF₆, LiI, LiBr, LiCF₃SO₃, potassium, sodium or acids.

8. Structure according to any of the previous claims containing a plurality of cavities (1) in the cementitious material and a plurality of electrochromic devices (7) arranged aligned in a direction or in a grid, on a surface of the electrochromic structure of cementitious material, and/or:
further comprising means of control suitable for controlling the difference of potential imposed by means of application of a difference of potential (4) and/or:
- local or remote communication means connected to the control means,
- power supply means consisting of one or more of the following:
• mains, energy storage means, associated energy capture system.

9. Structure according to any of the previous claims wherein the cementitious material consists of concrete, mortar or micro concrete.

10. Method of production of the electrochromic structure of cementitious material of any of the previous claims **characterized in that** it comprises the following steps:
a) inclusion of means of application of a difference of potential (4) in the cementitious material;
b) forming a cavity (1) in the surface of the structure of cementitious material;
c) depositing an electrically conductive electroactive element (8);
d) depositing an electrolyte (3) over the electroactive element (8);
e) depositing a first electrochromic element (2) over the the electrolyte (3).

11. Method of production according to the previous claim additionally comprising between steps b) and c) the step of depositing a filling electrical contact (6) over at least part of the means of application of a difference of potential (4).

12. Method of production according to the previous claim wherein step b) includes forming in said cavity (1) a smaller cavity (5) in which a portion of at least one of the at least two electrical conductors is electrically accessible, the smaller cavity (5) being suitable to expose at least one of said conductors to a contact with the electroactive element (8).

13. Method of production according to any of claims 11-12 wherein step e) consists of the deposition of an electrochromic element on which an electrically conductive element is deposited, and/or:
step c) consists of the deposition of an electroactive element on which an electrically conductive element is deposited, and/or,
step c) consists of the deposition of a second electrically conductive electrochromic element or the deposition of an electrically conductive element on which an electrochromic element is deposited.

14. Method of production according to any of claims 11-13 wherein any deposition step consists of depositing a layer of material of substantially planar form and wherein, preferably, the deposition of a layer of a filling electrical contact (6) is carried out specifically on one of the at least two electrical conductors comprising the means of application of a difference of potential (4).

15. Method of production according to any of claims 11-14 wherein the deposition of a first electrochromic element (2) places it in contact with the other of said at least two electrical conductors, and, optionally:
the deposition steps of any electroactive or electrochromic element include drying of those elements, and the step of deposition of the electrolyte layer (3) includes solidifying the electrolyte (3) by radiation curing or drying with temperature and, preferably, any of the deposition steps is performed by coating, printing or spraying and/or the cementitious material consist of concrete, mortar or micro concrete.

## Patentansprüche

1. Elektrochrome Struktur aus zementösem Material, die mindestens ein elektrochromes Gerät (7), in mindestens einem Hohlraum (1) gebildet, umfasst, worin das mindestens eine elektrochrome Gerät (7) ein erstes elektrochromes Element (2) und ein elektrisch leitendes elektroaktives Element (8) beinhaltet, voneinander durch ein Elektrolyt (3) isoliert, und weiterhin Mittel für Anwendung einer Potentialdifferenz (4) zwischen dem ersten elektrochromen Element (2) und dem elektroaktiven Element (8) umfasst, und worin:
a) die Mittel für Anwendung einer Potentialdifferenz (4) in dem zementösen Material integriert sind;
b) der Hohlraum (1) an der Oberfläche der Struktur aus zementösem Material gebildet ist;
c) das elektrisch leitende elektroaktive Element (8) auf dem Hohlraum (1) abgelagert ist;
d) das Elektrolyt (3) auf dem elektroaktiven Element (8) abgelagert ist;
e) das erste elektrochrome Element (2) auf dem Elektrolyt (3) abgelagert ist.

2. Elektrochrome Struktur aus zementösem Material nach dem vorhergehenden Anspruch, worin die Mittel für Anwendung einer Potentialdifferenz (4) mindestens zwei elektrische Leiter umfassen, teilweise in dem zementösen Material eingebettet, auf solche Weise angeordnet, dass ein Teil jeder der besagten Leiter in dem besagten Hohlraum (1) elektrisch zugänglich ist.

3. Struktur nach dem vorhergehenden Anspruch, worin das mindestens eine elektrochrome Gerät (7) weiterhin einen füllenden elektrischen Kontakt (6) umfasst, an einem der besagten mindestens zwei elektrischen Leitern angebracht, und mit dem elektroaktiven Element (8) in Kontakt ist.

4. Struktur nach dem vorhergehenden Anspruch, worin der andere der mindestens zwei elektrischen Leitern in elektrischem Kontakt mit dem ersten elektrochromen Element (2) ist, und, wahlweise:
das Teil des mindestens einem der elektrischen Leitern, der in dem besagten Hohlraum (1) elektrisch zugänglich ist, befindet sich gezielt in mindestens einem anderen kleineren Hohlraum (5), der im Hohlraum (1) gebildet ist, geeignet, um mindestens einen der besagten Leitern dem Kontakt mit dem elektroaktiven Element (8) auszusetzten.

5. Struktur nach jedem der vorhergehenden Ansprüche, worin das erste elektrochrome Element (2) aus der Zusammenstellung eines elektrochromen Elements mit einem elektrischen Leitelement besteht, und/oder:
das elektrisch leitende elektroaktive Element (8) aus der Zusammenstellung eines elektroaktiven Elements mit einem elektrischen Leitelement besteht.

6. Struktur nach jedem der vorhergehenden Ansprüche, worin das elektroaktive Element (8) aus einem zweiten elektrochromen Element besteht, welches elektrisch leitfähig ist oder welches aus einer Zusammenstellung eines elektrochromen Elements mit einem elektrischen Leitelement besteht.

7. Struktur nach jedem der vorhergehenden Ansprüche, worin jede der Komponenten des elektrochromen Geräts (7) auf einer Schicht, mit einer im Wesentlichen planen Form, angeordnet ist und, vorzugsweise, ist das elektrochrome Gerät (7) parallel zu mindestens einer Oberfläche der Struktur aus zementösem Material angeordnet, und/oder:
jedes der Elemente mit elektrochromen Eigenschaften umfasst ein elektrochromes Material aus einem der folgenden Gruppen:
• Metalle, Lanthaniden, Polyoxometallate und Kombinationen davon;
• organische Moleküle;
• konjugierte Polymere;
• Koordinationsverbindungen von Metallen
und vorzugsweise, wird das Elektrolyt (3) gebildet, indem ein Salz 2-15% w/w, mindestens ein Harz, mindestens ein Lösungsmittel und ein geeignetes Additiv, um das Aussehen und die Festigkeit zu verändern, beigemischt werden, worin das Salz aus folgenden Komponenten besteht: LiClO₄, ZnCl₂, LiBF₄; LiAsF₆, LiI, LiBr, LiCF₃SO₃, Kalium, Natrium oder Säuren.

8. Struktur nach jedem der vorhergehenden Ansprüche, welche eine Vielzahl von Hohlräumen (1) in dem zementösen Material und eine Vielzahl von elektrochromen Geräten (7), die in eine Richtung ausgerichtet oder in einem Gitter angeordnet sind, auf einer Oberfläche der elektrochromen Struktur aus zementösem Material, beinhaltet und/oder:
weiterhin Kontrollmittel, die für die Kontrolle der Potentialdifferenz geeignet sind, durch die Mittel für Anwendung einer Potentialdifferenz (4) auferlegt, umfasst und/oder:
- lokale oder Fernkommunikationsmittel, die an die Kontrollmittel verbunden sind,
- Stromversorgungsmittel, die aus einem oder mehreren der folgenden bestehen:
• Stromnetz, Energiespeichermittel, zugehöriges Energieerfassungssystem.

9. Struktur nach jedem der vorhergehenden Ansprüche, worin das zementöse Material aus Beton, Mörtel oder Mikrobeton besteht.

10. Produktionsmethode der elektrochromen Struktur aus zementösem Material nach jedem der vorhergehenden Ansprüche, **dadurch gekennzeichnet, dass** es die folgenden Schritte umfasst:
a) Eingliederung der Mittel für Anwendung einer Potentialdifferenz (4) in dem zementösen Material;
b) Bildung eines Hohlraums (1) in der Oberfläche der Struktur aus zementösem Material;
c) Ablagerung eines elektrisch leitenden elektroaktiven Elements (8);
d) Ablagerung eines Elektrolyten (3) auf dem elektroaktiven Element (8);
e) Ablagerung eines ersten elektrochromen Elements (2) auf dem Elektrolyten (3).

11. Produktionsmethode nach dem vorhergenden Anspruch, welche zusätzlich zwischen Schritten b) und c) den Schritt der Ablagerung eines füllenden elektrischen Kontakts (6) über mindestens Teil der Mittel für Anwendung einer Potentialdifferenz (4), umfasst.

12. Produktionsmethode nach dem vorhergenden Anspruch, worin Schritt b) in dem besagten Hohlraum (1) die Bildung eines kleineren Hohlraums (5), in dem ein Teil von mindestens einem der mindestens zwei elektrischen Leitern elektrisch zugänglich ist, umfasst, worin der kleinere Hohlraum (5) geeignet ist, um mindestens einen der besagten Leitern dem Kontakt mit dem elektroaktiven Element (8) auszusetzten.

13. Produktionsmethode nach jedem der Ansprüche 11-12, worin Schritt e) aus der Ablagerung eines elektrochromen Elements, auf dem ein elektrisch leitendes Element abgelagert ist, besteht, und/oder:
Schritt c) aus der Ablagerung eines elektroaktivem Elements, auf dem ein elektrisch leitendes Element abgelagert ist, besteht, und/oder:
Schritt c) aus der Ablagerung eines zweitem elektrisch leitenden elektrochromen Elements oder der Ablagerung eines elektrisch leitendem Elements auf dem ein elektrochromes Element abgelagert ist.

14. Produktionsmethode nach jedem der Ansprüche 11-13, worin jeder Ablagerungsschritt aus der Ablagerung einer Schicht des Materials, die, im Wesentlichen, aus planer Form besteht und worin, vorzugsweise, die Ablagerung einer Schicht eines füllenden elektrischen Kontakts (6) gezielt an einem der mindestens zwei elektrischen Leitern, welche die Mittel für Anwendung einer Potentialdifferenz (4) umfassen, ausgeführt wird.

15. Produktionsmethode nach jedem der Ansprüche 11-14, worin die Ablagerung eines ersten elektrochromen Elements (2) dieses mit dem anderen der besagten mindestens zwei elektrischen Leitern in Kontakt setzt, und, wahlweise:
die Ablagerungsschritte jedes elektroaktiven oder elektrochromen Elements die Trocknung dieser Elemente einschließt, und der Ablagerungsschritt der Elektrolytschicht (3) die Festigung des Elektrolyts (3) durch Strahlenhärtung oder Trocknung durch Temperatur einschließt und, vorzugsweise, wird jeder der Ablagerungsschritte durch Beschichtung, Bedruckung oder Besprühung ausgeführt und/oder besteht das zementöse Material aus Beton, Mörtel oder Mikrobeton.

## Revendications

1. Structure de matériau cimentaire électrochromique comprenant au moins un dispositif électrochromique (7) formé dans au moins une cavité (1), dans laquelle ledit au moins un dispositif électrochromique (7) comprend un premier élément électrochromique (2) et un élément électro-actif (8) conducteur électrique, isolés l'un de l'autre par un électrolyte (3), et comprenant en outre des moyens d'application d'une différence de potentiel (4) entre le premier élément électrochromique (2) et l'élément électro-actif (8), et dans laquelle :
a) les moyens d'application d'une différence de potentiel (4) sont inclus dans le matériau cimentaire ;
b) la cavité (1) est formée dans la surface de la structure de matériau cimentaire ;
c) l'élément électro-actif (8) conducteur électrique est déposé sur la cavité (1) ;
d) l'électrolyte (3) est déposé sur l'élément électro-actif (8) ;
e) le premier élément électrochromique (2) est déposé sur l'électrolyte (3).

2. Structure de matériau cimentaire électrochromique selon la revendication précédente, dans laquelle les moyens d'application d'une différence de potentiel (4) comprennent au moins deux conducteurs électriques partiellement intégrés dans le matériau cimentaire, disposés de sorte qu'une portion de chacun desdits conducteurs est électriquement accessible dans ladite cavité (1).

3. Structure selon la revendication précédente, dans laquelle le au moins un dispositif électrochromique (7) comprend également un contact électrique de remplissage (6) disposé sur l'un desdits au moins deux conducteurs électriques, et en contact avec l'élément électro-actif (8).

4. Structure selon la revendication précédente, dans laquelle l'autre des au moins deux conducteurs électriques est en contact électrique avec le premier élément électrochromique (2) et, facultativement,
la portion du au moins un des conducteurs électriquement accessible dans ladite cavité (1) se trouve spécifiquement dans au moins une autre cavité plus petite (5) formée dans la cavité (1), adéquate pour exposer au moins un desdits conducteurs en contact avec l'élément électro-actif (8).

5. Structure selon l'une quelconque des revendications précédentes, dans laquelle le premier élément électrochromique (2) est constitué par l'association d'un élément électrochromique avec un élément conducteur électrique, et/ou :
l'élément électro-actif (8) conducteur électrique est constitué par l'association d'un élément électro-actif avec un élément conducteur électrique.

6. Structure selon l'une quelconque des revendications précédentes, dans laquelle l'élément électro-actif (8) est constitué par un deuxième élément électrochromique, qui est conducteur électrique ou qui est constitué par l'association d'un élément électrochromique avec un élément conducteur électrique.

7. Structure selon l'une quelconque des revendications précédentes, dans laquelle chacun de composants du dispositif électrochromique (7) est disposé sur une couche ayant une forme substantiellement planaire et, de préférence, le dispositif électrochromique (7) est disposé parallèlement à au moins une surface de la structure de matériau cimentaires, et/ou :
chacun des éléments à propriétés électrochromiques comprend un matériau électrochromique d'au moins un des groupes suivants :
• métaux, lanthanides, polyoxométallates et leurs combinaisons ;
• molécules organiques ;
• polymères conjugués ;
• complexes de coordination de métaux
et, de préférence, l'électrolyte (3) est formé en mélangeant un sel à 2-15% en poids, au moins une résine, au moins un solvant et un additif adéquat pour modifier l'apparence et la rigidité, où le sel est constitué des composants suivants : LiClO₄, ZnCl₂, LiBF₄, LiAsF₆, Lil, LiBr, LiCF₃SO₃, potassium, sodium ou acides.

8. Structure selon l'une quelconque des revendications précédentes comprenant une pluralité de cavités (1) dans le matériau cimentaire et une pluralité de dispositifs électrochromiques (7) disposés de façon alignée dans une direction ou en grille, sur une surface de la structure électrochromique du matériau cimentaire, et/ou comprenant en outre des moyens de commande adéquats pour contrôler la différence de potentiel imposée par les moyens d'application d'une différence de potentiel (4) et/ou :
- des moyens de communication locale ou à distance reliés aux moyens de commande,
- des moyens d'alimentation électrique constitués par un ou plusieurs des moyens suivants :
• réseau électrique, moyens de stockage d'énergie, système de capture d'énergie associé.

9. Structure selon l'une quelconque des revendications précédentes, dans laquelle le matériau cimentaire est le béton, le mortier ou le micro-béton.

10. Procédé de production de la structure de matériau cimentaire électrochromique de l'une quelconque des revendications précédentes, **caractérisé en ce qu'**il comprend lest étapes suivantes :
a) inclusion de moyens d'application d'une différence de potentiel (4) dans le matériau cimentaire ;
b) formation d'une cavité (1) dans la surface de la structure de matériau cimentaire ;
c) déposition d'un élément électro-actif (8) conducteur électrique ;
d) déposition d'un électrolyte (3) sur l'élément électro-actif (8) ;
e) déposition d'un premier élément électrochromique (2) sur l'électrolyte.

11. Procédé de production selon la revendication précédente comprenant en outre, entre les étapes b) et c), l'étape de déposer un contact électrique de remplissage (6) sur au moins une partie des moyens d'application d'une différence de potentiel (4).

12. Procédé de production selon la revendication précédente, dans lequel l'étape b) comprend la formation dans ladite cavité (1) d'une cavité plus petite (5) où une portion d'au moins un des au moins deux conducteurs électriques est électriquement accessible, la cavité plus petite (5) étant adéquate pour exposer au moins un desdits conducteurs à un contact avec l'élément électro-actif (8).

13. Procédé de production selon l'une quelconque des revendications 11-12, dans lequel l'étape e) consiste en la déposition d'un élément électrochromique sur lequel est déposé un élément conducteur électrique, et/ou :
l'étape c) consiste en la déposition d'un élément électro-actif sur lequel est déposé un élément conducteur électrique, et/ou,
l'étape c) consiste en la déposition d'un deuxième élément électrochromique conducteur électrique ou la déposition d'un élément conducteur électrique sur lequel est déposé un élément électrochromique.

14. Procédé de production selon l'une quelconque des revendications 11-13, dans lequel chacune des étapes de déposition consiste en la déposition d'une couche de matériau substantiellement planaire et dans lequel, de préférence, la déposition d'une couche d'un contact électrique de remplissage (6) est réalisée spécifiquement sur l'un des au moins deux conducteurs électriques comprenant les moyens d'application d'une différence de potentiel (4).

15. Procédé de production selon l'une quelconque des revendications 11-14, dans lequel la déposition d'un premier élément électrochromique (2) le met en contact avec l'autre desdits au moins deux conducteurs électriques et, facultativement :
les étapes de déposition de n'importe quel élément électro-actif ou électrochromique inclut le séchage de ces éléments,
et l'étape de déposition de la couche d'électrolyte (3) inclut la solidification de l'électrolyte (3) par durcissement par rayonnement ou séchage avec température et,
de préférence, chacune des étapes de déposition est réalisée par revêtement, impression ou pulvérisation et/ou le matériau cimentaire est le béton, le mortier ou le micro-béton.
